# EUROPEAN PATENT SPECIFICATION

(11) **EP 3 450 228 B1**
(45) Date of publication and mention of the grant of the patent: **19.04.2023**
(21) Application number: 18192673.4
(22) Date of filing: 05.09.2018
(51) Int. Cl.: B60H 1/32, F25B 19/00

(54) **CONDITIONING SYSTEM FOR A GAS VEHICLE**
KONDITIONIERUNGSSYSTEM FÜR EIN GASFAHRZEUG
SYSTÈME DE CONDITIONNEMENT POUR VÉHICULE À GAZ

(30) Priority: 05.09.2017 IT 201700099422
(43) Date of publication of application: 06.03.2019
(73) Proprietor: IVECO MAGIRUS AG, 89079 Ulm (DE)
(72) Inventor: VARWICK, Manuel, 89077 ULM (DE); KRUG, Christian, 89081 ULM (DE)
(74) Representative: Bongiovanni, Simone

(56) References cited:
- WO-A1-02/060710
- US-A- 3 640 337
- US-A- 5 560 212

## Description

### TECHNICAL FIELD

The present invention concerns a conditioning system for a gas vehicle, in particular a conditioning system of a liquid natural gas (LNG) for conditioning an inner volume/object of the gas vehicle.

### BACKGROUND ART

Traditional conditioning systems use the change of phase of a fluid, called the refrigerant, from a compressed liquid state to a gaseous state, or vice-versa, for exchanging thermal energy with the object of the conditioning, e.g. the air or an electronic equipment.

Traditional conditioning systems usually comprise four elements, namely a compressor, an evaporator, an expansion valve and a condenser, which are connected to create a so-called "refrigerant cycle".

However, the energy used to allow the operation of a refrigerant cycle, i.e. essentially the energy to be provided to the compressor to its operation, is high and therefore the fuel consumption of a vehicle comprising a conditioning system is considerably greater than that of a vehicle, which is devoid of the latter.

Moreover, since a traditional conditioning system comprises at least the above described four elements, the costs and the space needed to house these latter and the related conduits in the vehicle are not negligible.

Examples of traditional known condition systems are disclosed in documents WG2002060710 A1, US5560212 A or US3640337 A.

Therefore, the need is felt to improve existing conditioning systems in order to decrease the fuel consumption of the vehicles comprising such systems and to reduce their encumbrance and their costs.

### DISCLOSURE OF INVENTION

An aim of the present invention is to satisfy at least one of the above mentioned needs.

The aforementioned aim is reached by a system for a vehicle and a vehicle comprising this latter according to the appended set of claims.

### BRIEF DESCRIPTION OF THE DRAWINGS

For a better understanding of the present invention, a preferred embodiment is described in the following, by way of a non-limiting example, with reference to the attached drawings wherein:
- Figure 1 is a schematic representation of a conditioning system according to an embodiment not making part of the present invention, but useful to its understanding;
- Figures 2 to 4 are schematic representations of different phases of the operation of the system of figure 1;
- Figure 5 is a schematic representation of a conditioning system according to an embodiment not making part of the present invention, but useful to its understanding; Figures 6 and 7 are schematic representations of different phases of the operation of the system of figure 5;
- Figure 8 is a schematic representation of a conditioning system according to the present invention;
- Figures 9 and 10 are schematic representations of different phases of the operation of the system of figure 8;
- Figure 11 is a schematic representation of a conditioning system according to an embodiment not making part of the present invention, but useful to its understanding;
- Figures 12 to 13 are schematic representations of different phases of the operation of the system of figure 11; and
- Figure 14 and 15 are a schematic representation of a conditioning system according to further variation of the system of figure 11.

### BEST MODE FOR CARRYING OUT THE INVENTION

In the annexed figures, the same reference numbers identify the same element through different embodiments. The term "first" or "second" are not used in a limitative way but only for sake of clarity, i.e. the presence of a "first" element does not consequently need the presence of a "second" element.

For sake of simplicity the following description is related to an AC system, however it is clear that it can be applied for conditioning other elements, i.e. electronic equipment or battery packs of the vehicle.

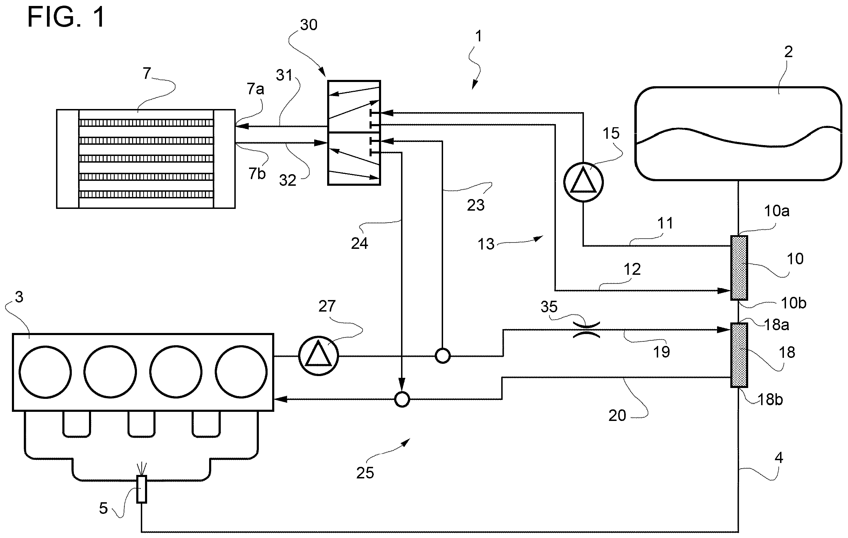

In figure 1 the reference 1 globally indicates an AC system for a gas vehicle (not shown) according to an embodiment not making part of the present invention, but useful to its understanding..

The gas vehicle comprises at least a tank 2, e.g. one or more bottles, configured to contain a compressed gas in liquid state, e.g. liquid natural gas, suitable for being used for the operation of the gas vehicle.

In more detail, the gas vehicle further comprises a gas engine 3 and a conduit 4 fluidly connecting the tank 2 to the gas engine 3. As known, the gas is injected into the engine 3 from the tank 2 via conduit 4 through an injection valve 5. During the passage in the conduit 4, the gas, which is in liquid state, is expanded to be gaseous in order to be usable for the engine 3.

The AC system 1 comprises a main heat exchanger 7 configured to condition the air of an inner volume of the vehicle, thanks to the passage of a conditioning fluid through it. In particular, the main heat exchanger 7 may be a radiator realized as a single pass, counter-flow or crossflow as known in the art.

Advantageously the AC system comprises a first heat exchanger 10 placed on conduit 4 and fluidly connected to the main heat exchanger 7 via a first supply conduit 11 and a first return conduit 12, defining in this way a first sub-circuit 13 where a first conditioning fluid, i.e. a refrigerant fluid, may circulate in the heat exchanger 7, the conduits 11 and 12 and the first heat exchanger 10.

The AC system 1 may preferably comprise a pump 15 configured to allow the circulation of the refrigerant fluid in the first circuit 13. More preferably, the pump 15 may be an electric pump.

The first heat exchanger 10 is placed on the conduit 4 in such a way that between an inlet 10a and an outlet 10b of said heat exchanger the compressed gas of tank 2 in conduit 4 passes from liquid state to gaseous state. The transformation from liquid to gaseous states absorbs thermal energy from the environment, therefore cooling the refrigerant fluid circulating in the first heat exchanger 10.

Advantageously the AC system 1 may further comprise a second heat exchanger 18 placed on conduit 4 downstream with respect the first heat exchanger 10 according to the direction of the gas from the tank 2 to the engine 3. The second heat exchanger 18 is fluidly connected to the engine 3 via a second supply conduit 19 and a second return conduit 20. The second heat exchanger 18 is moreover fluidly connected to the main heat exchanger 7 thanks to a couple of auxiliary conduits 23, 24 respectively fluidly connecting the heat exchanger 7 with the second supply conduit 19 and a second return conduit 20.

The above described configuration defines a sub-second circuit 25 where a second conditioning fluid, i.e. the engine cooling fluid, may circulate between the heat exchanger 7, the conduits 19, 20, 23 and 24 and the second heat exchanger 18.

The AC system 1 may preferably comprise a pump 27 configured to allow the circulation of the engine cooling fluid in the second circuit 25. More preferably, the pump 27 may be a mechanical pump.

The second heat exchanger 18 is placed on the conduit 4 in such a way that between an inlet 18a and an outlet 18b of said heat exchanger the expanded gas coming from the outlet 10b of the first heat exchanger in conduit 4 overheats by absorbing the thermal energy of the engine coolant fluid. The expanded gas is overheated to a predefined temperature in order to guarantee a correct temperature of injection in the engine 3.

The AC system may further comprise a valve 30 configured to regulate the fluxes of the first and second fluids from conduits 11, 12, 23 and 24 with the main heat exchanger 7. In particular the valve 30 is configured to fluidly connect the conduits 11, 12, 23 and 24 with a third supply conduit 31 and a second supply conduit 32 connected respectively to an inlet 7a and an outlet 7b of the heat exchanger 7.

The valve 30 may be a six ways-two positions valve allowing, in a first position, the circulation of the refrigerant fluid of circuit 13 in the main heat exchanger 7 and, in a second position, the circulation of said engine cooling fluid of circuit 25 in the main heat exchanger 7.

The AC system 1 may further comprise a throttle valve 35 placed upstream the second heat exchanger 18 but downstream with respect to the auxiliary conduit 23. The throttle valve 35 is configured to regulate the flow of engine cooling fluid into the second heat exchanger 18 and consequently the flow of the same into the auxiliary conduits 23, 24.

Preferably, the described actuated elements, i.e. the valve 30, the throttle valve 35 or the pumps 15, 27 are operated electronically thanks to a control unit, e.g. the ECU of the vehicle, in a known way.

The operation of the above described embodiment of the AC system 1 is the following.

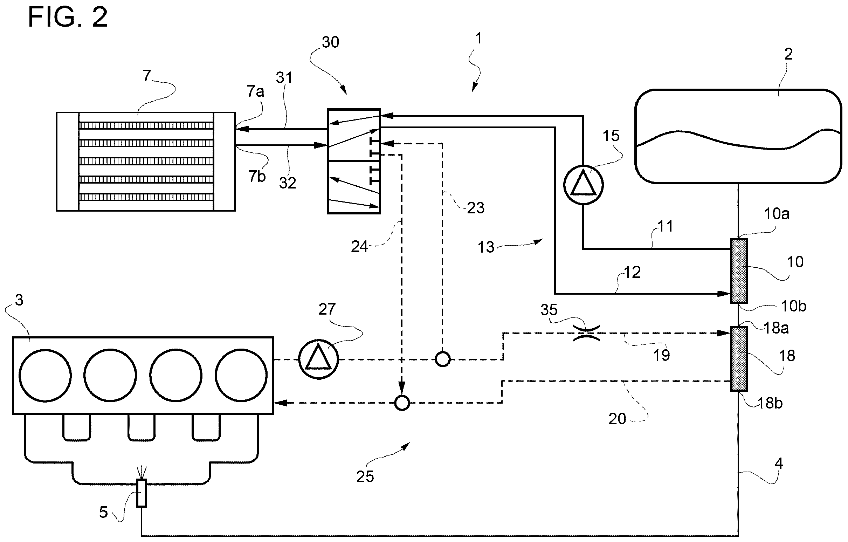

In a first phase of operation of the above described AC system 1 (figure 2), the valve 30 is positioned in order to allow the circulation of the refrigerant fluid of circuit 13 into the heat exchanger 7 to cool the inner volume of the vehicle.

In such configuration, the refrigerant fluid flows through the first heat exchanger 10 and is cooled by the thermal absorption due to liquid compressed gas expansion to gaseous phase. The cooled refrigerant fluid flows in the first supply conduit 11, through valve 30 into the exchanger 7 where it is overheated by the thermal change with the air of the inner volume of the vehicle. The heated refrigerant fluid therefore come back to the first heat exchanger 10 passing through valve 30 and the first return conduit 12.

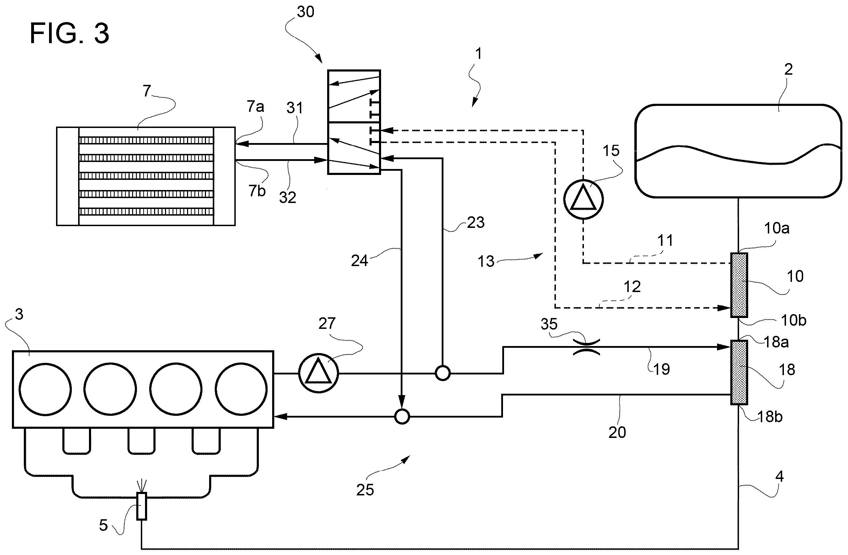

In a second phase of operation of the above described AC system 1 (figure 3), the valve 30 is positioned in order to allow the circulation of the engine coolant fluid of circuit 25 into the heat exchanger 7 to heat the inner volume of the vehicle; the throttle valve 35 is open.

In such configuration the engine coolant fluid, heated by the passage in the engine 3 to cool it, flows through conduit 19 and the throttle valve 35, into the second heat exchanger 18 in order to overheat the expanded gas in conduit 4 before the injection into the engine 3. When cooled by transferring thermal energy to the expanded gas of conduit 4, the cooled engine cooling fluid comes back to the engine 3 to cool this latter. In the meanwhile, part of the heated engine cooling fluid flows from the second supply conduit 19 to conduit 23 through the valve 31 to the heat exchanger 7 where it is cooled by the thermal exchange with the air of the inner volume of the vehicle. When cooled, the engine cooling fluid comes back through the valve 30 through conduit 24 and mix with the engine cooling fluid coming from the second heat exchanger 18 and therefore flows to the engine 3.

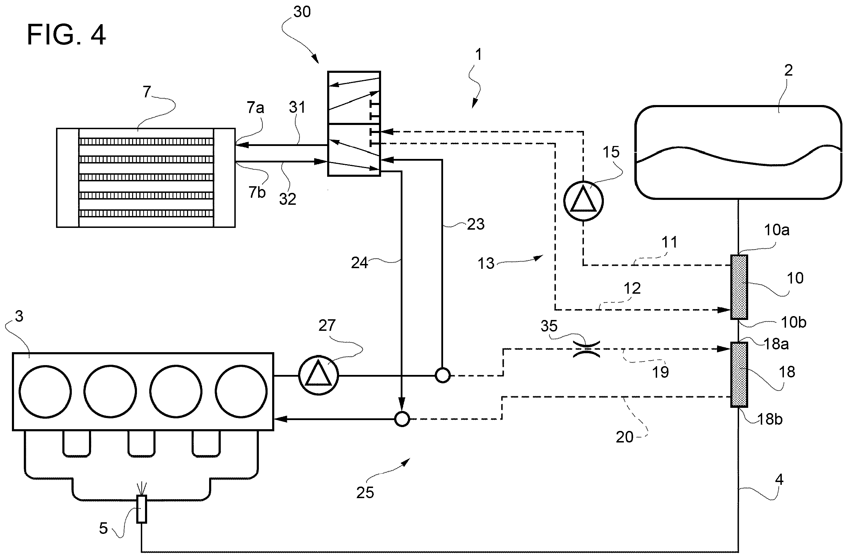

In a third phase of operation of the above described AC system 1 (figure 4), the valve 30 is positioned in order to allow the circulation of the engine coolant fluid of circuit 25 into the heat exchanger 7 to heat the inner volume of the vehicle, but the throttle valve 35 is closed.

In such configuration the engine coolant fluid, heated by the passage in the engine 3 to cool it flows directly into conduit 23, since the throttle valve 35, being closed, does not allow the passage of the cooling engine fluid in the second heat exchanger 18. The heated engine cooling fluid flows therefore through the valve 31 to the heat exchanger 7 where it is cooled by the thermal change with the air of the inner volume of the vehicle. When cooled, the engine cooling fluid comes back through the valve 30 through conduit 24 directly to engine 3.

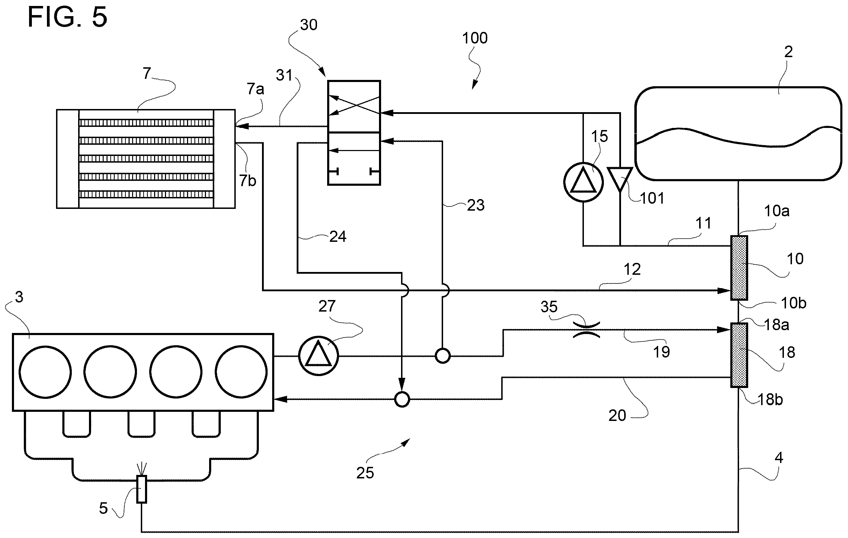

In figure 5 the reference 100 globally indicates an AC system for a gas vehicle (not shown) according to an embodiment not making part of the present invention, but useful to its understanding..

With respect the AC system of the embodiment of figure 1, the valve 30 is a four ways-two positions valve, conduit 12 fluidly connects directly the outlet 7b of the heat exchanger 7 to the outlet 10b of the first heat exchanger 10 and the conduit 24 fluidly connects an outlet of the valve 30 to conduit 20.

The AC system 100 moreover comprises a further valve 101, fluidly connected in parallel to pump 15 on conduit 11, preferably realized as a non-return valve.

The operation of the above described embodiment of the AC system is the following.

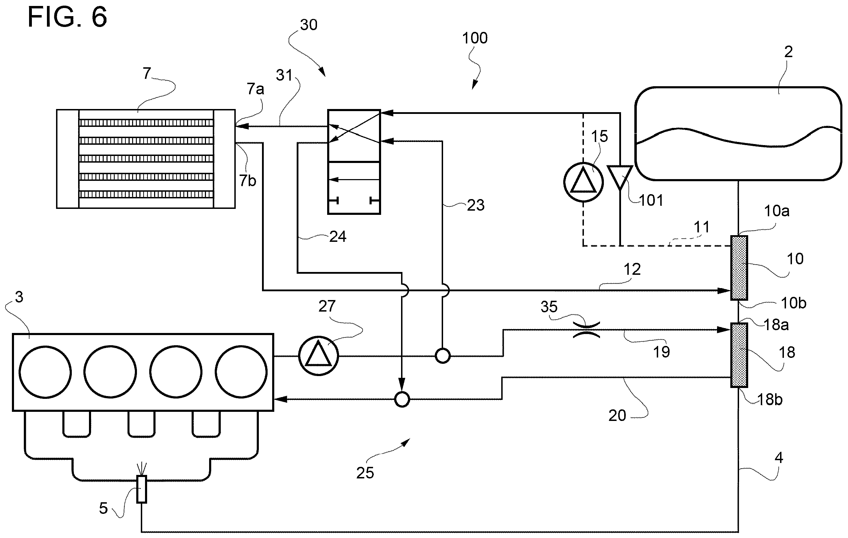

In a first phase of operation of the above described AC system 100 (figure 6), the valve 30 is positioned in order to allow the circulation of the engine coolant fluid of circuit 25 into the heat exchanger 7 to heat the inner volume of the vehicle.

In such configuration, the engine coolant fluid, heated by the passage in the engine 3 to cool it, flows through the conduit 19 thanks to the operation of the pump 27. Thanks to the throttle valve 35, a portion of the flow flows from conduit 23 to the valve 30 and thereby to the inlet 7a of the heat exchanger 7. The heated engine cooling fluid flows therefore through the valve 31 to the heat exchanger 7 where it is cooled by the thermal change with the air of the inner volume of the vehicle. When cooled, the engine cooling fluid comes back directly to the first heat exchanger 10 where it is cooled by the thermal absorption due to liquid compressed gas expansion to gaseous phase. Once passed through the first heat exchanger 10, the fluid flows through the non-return valve 101, which is opened, to the valve 30 and comes back via conduit 24 to conduit 20 and therefore to the engine to cool it.

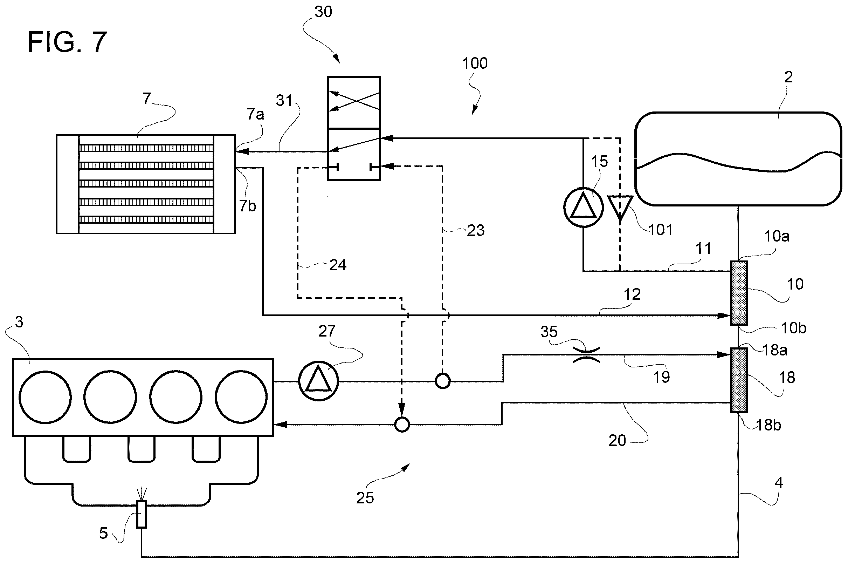

In a second phase of operation of the above described AC system 100 (figure 7), the valve 30 is positioned in order to allow the circulation of the refrigerant fluid of circuit 13 into the heat exchanger 7 to cool the inner volume of the vehicle.

In such configuration, the engine cooling fluid flows through the first heat exchanger 10 and is cooled by the thermal absorption due to liquid compressed gas expansion to gaseous phase. The cooled engine cooling fluid flows in the first supply conduit 11, thanks to the operation of pump 15, through valve 30 into the exchanger 7 where it is overheated by the thermal change with the air of the inner volume of the vehicle. The heated engine cooling fluid therefore come back to the first heat exchanger 10 passing through valve 30 and the conduit 12. Moreover, the non-return valve 101 is closed and the valve 30 is positioned so that the engine cooling fluid does not flow in conduits 23 and 24. In this way, the engine cooling fluid simply flows in circuit 25 through the second heat exchanger 18 overheating the gas flowing in conduit 14 as already described.

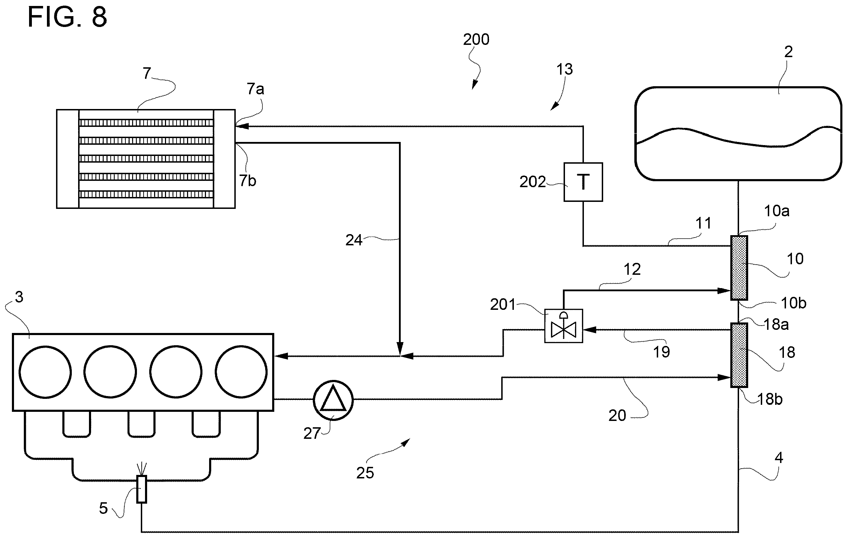

In figure 8 the reference 200 globally indicates an AC system for a gas vehicle (not shown) according to the present invention.

With respect the AC system of the embodiment of figure 1, the valve 30, the pump 15 and the conduit 23 are absent. Circuit 13 therefore essentially comprises conduit 11 which fluidly connect the first heat exchanger with the heat exchanger 7, conduit 12 which is fluidly connected to conduit 19, a portion of conduit 19 and conduit 24 which fluidly connect the heat exchanger 7 with conduit 19.

The AC system 200 moreover comprises a valve 201, fluidly interposed between conduit 19 and conduit 12, preferably realized as an electronic controlled volume flow valve. AC system 200 comprises moreover a sensor 202 placed on conduit 11 and configured to detect a physical entity of the fluid flowing in conduit 11. In particular, sensor 202 may be a temperature sensor configured to detect the temperature of the fluid flowing in the latter. Finally, the pump 27 may be positioned on conduit 20 instead of conduit 19.

The operation of the above described embodiment of the AC system according to the invention is the following.

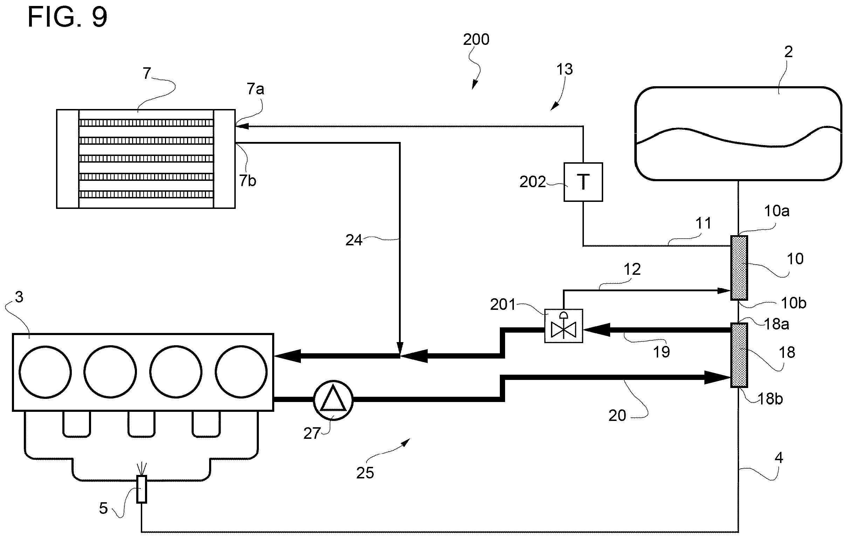

In a first phase of operation of the above described AC system 200 (figure 9), the electronic controlled volume flow valve 201 is configured to allow the passage of the majority of the engine cooling fluid in circuit 25 and only a few portion in conduit 12 and therefore in circuit 13. In particular, the engine cooling fluid flows from engine 3 to the second heat exchanger 18 via conduit 20 and overheat the gas flowing in conduit 14 and therefore flows through valve 201 for its majority directly back to engine 3. A few portion of the engine cooling fluid is spilled by valve 201 and flows via conduit 12 to the first heat exchanger 10 where it is cooled by the gas phase transformation. From the first heat exchanger 10 the cooled fluid flows through the exchanger 7 where it is overheated by the thermal change with the air of the inner volume of the vehicle. The heated engine cooling fluid therefore comes back via conduit 24 directly to the engine 3 together with the majority of the flow coming from the valve 201 via conduit 19.

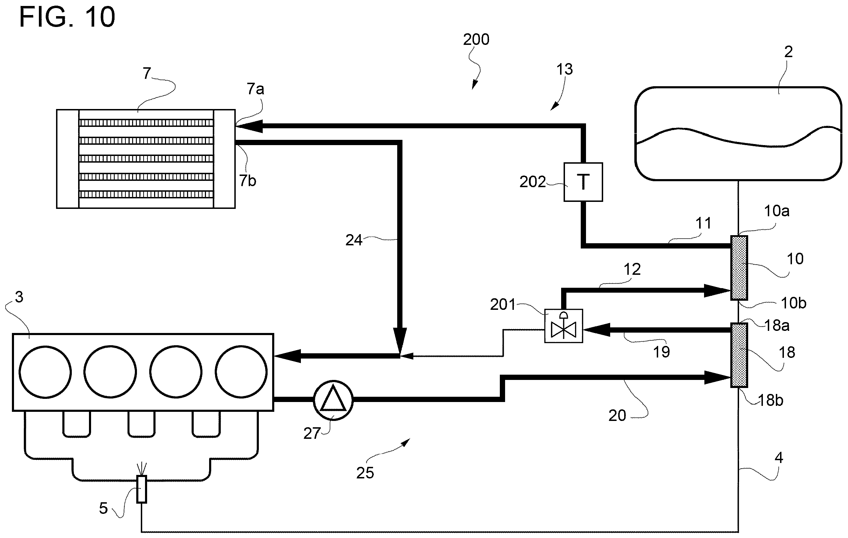

In a second phase of operation of the above described AC system 200 (figure 10), the electronic controlled volume flow valve 201 is configured to allow the passage of the majority of the engine cooling fluid in circuit 13 via conduit 12 and only a few portion in the remaining portion of conduit 19 and therefore in circuit 25. In particular, the engine cooling fluid flows from engine 3 to the second heat exchanger 18 via conduit 20 and overheat the gas flowing in conduit 14. The fluid coming from second heat exchanger is spilled by valve 201 and flows via conduit 12 to the first heat exchanger 10 where it is cooled by the gas phase transformation. From the first heat exchanger 10 the cooled fluid flows through the exchanger 7 where it is again cooled by the thermal change with the air of the inner volume of the vehicle. The cooled engine cooling fluid therefore comes back via conduit 24 directly to the engine 3 together with the few portion of the flow coming from the valve 201 via conduit 19.

The temperature sensor 202 may be advantageously electronically connected to the valve 201 in order to regulate the flow of the fluid in conduits 12 and 19 in order regulate the temperature of the fluid passing through exchanger 7. In this way the user can select between various values of temperature both in the cooling phase, when the fluid flowing in circuit 13 is less than the fluid flowing in circuit 25, and in heating phase, when the fluid flowing in circuit 13 is more than the fluid flowing in circuit 25.

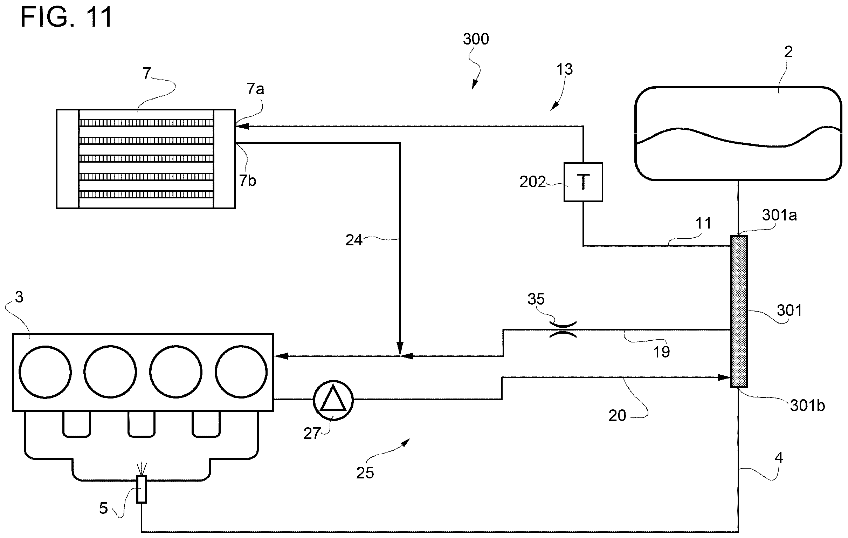

In figure 11 the reference 300 globally indicates an AC system for a gas vehicle (not shown) according to an embodiment not making part of the present invention, but useful to its understanding.

With respect the AC system of the embodiment of figure 1, the valve 30, the pump 15, the conduit 23, the first and second heat exchangers 10, 18 and conduit 12 are absent. The AC system 300 comprises, instead of first and second heat exchangers 10, 18, a single heat exchanger 301 comprising an inlet 301a and an outlet 301b for the gas flowing through it via conduit 14. Circuit 13 of AC system 300 therefore essentially comprises conduit 11 which fluidly connect heat exchanger 301 with the heat exchanger 7, and conduit 24 which fluidly connect the heat exchanger 7 with conduit 19. Circuit 25 of AC system 300 consequently comprises conduits 19 and 20 which fluidly connects the engine 3 to the heat exchanger 301.

The AC system 300 moreover comprises the throttle valve 35 placed preferably on conduit 19 downstream with respect the heat exchanger 301 according to circuit 25. AC system 300 further comprises the temperature sensor 202 placed on conduit 11 and configured to detect the temperature of the fluid flowing in the latter. Finally, the pump 27 is positioned on conduit 20 instead of conduit 19.

The operation of the above described embodiment of the AC system is the following.

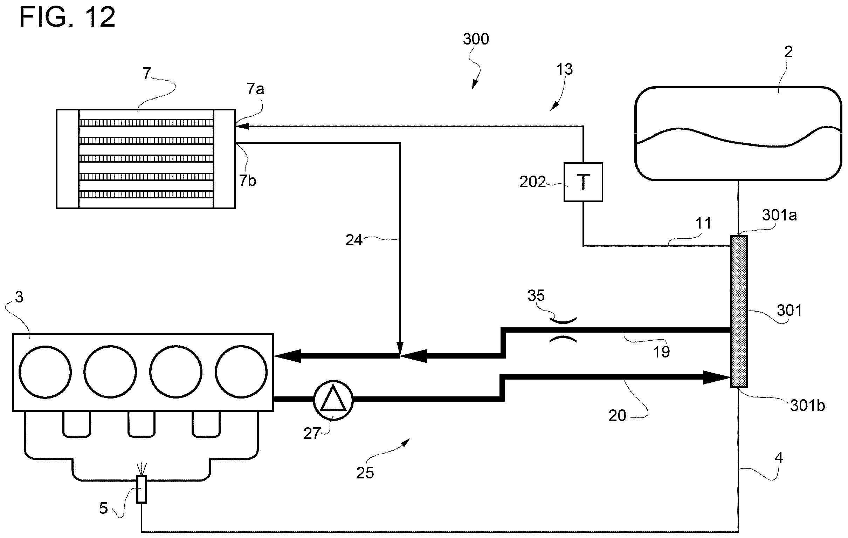

In a first phase of operation of the above described AC system 300 (figure 12), the throttle valve 35 is configured to allow the passage of the majority of the engine cooling fluid in circuit 25 and only a few portion in conduit 11 and therefore in circuit 13. In particular, the engine cooling fluid flows from engine 3 to the heat exchanger 301 via conduit 20 and overheat the gas flowing in conduit 14; a majority of such fluid flows directly back to engine 3 via conduit 19 thanks to the opening of throttle valve 35. A few portion of the engine cooling fluid continues to flow through the exchanger 301 becoming increasingly cooled by the gas phase transformation and flows via conduit 11 to the exchanger 7 where it is overheated by the thermal change with the air of the inner volume of the vehicle. The heated engine cooling fluid therefore comes back via conduit 24 directly to the engine 3 together with the majority of the flow coming from the valve 35 via conduit 19.

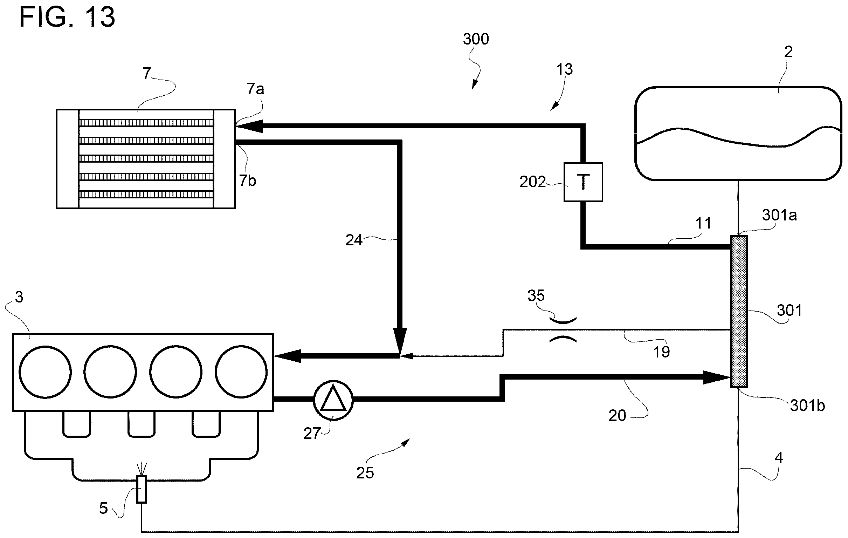

In a second phase of operation of the above described AC system 300 (figure 13), the throttle valve 35 is configured to allow the passage of the majority of the engine cooling fluid in circuit 13 via conduit 11 and only a few portion in the remaining portion of conduit 19 and therefore in circuit 25. In particular, the engine cooling fluid flows from engine 3 to the heat exchanger 301 via conduit 20 and overheat the gas flowing in conduit 14. Only a few portion of the cooling engine fluid is spilled by throttle valve 35 via conduit 19, the majority continues to flow through the exchanger 301 and is cooled by the gas change transformation. This cooled, but still hot, fluid flows through the exchanger 7 where it is again cooled by the thermal change with the air of the inner volume of the vehicle. The cooled cooling fluid therefore comes back via conduit 24 directly to the engine 3 together with the few portion of the flow coming from the valve 35 via conduit 19.

The temperature sensor 202 may be advantageously electronically connected to the valve 35 in order to regulate the flow of the fluid in conduits 12 and 19 in order regulate the temperature of the fluid passing through exchanger 7. In this way the user can select between various values of temperature both in the cooling phase, when the fluid flowing in circuit 13 is less than the fluid flowing in circuit 25, and in heating phase, when the fluid flowing in circuit 13 is more than the fluid flowing in circuit 25.

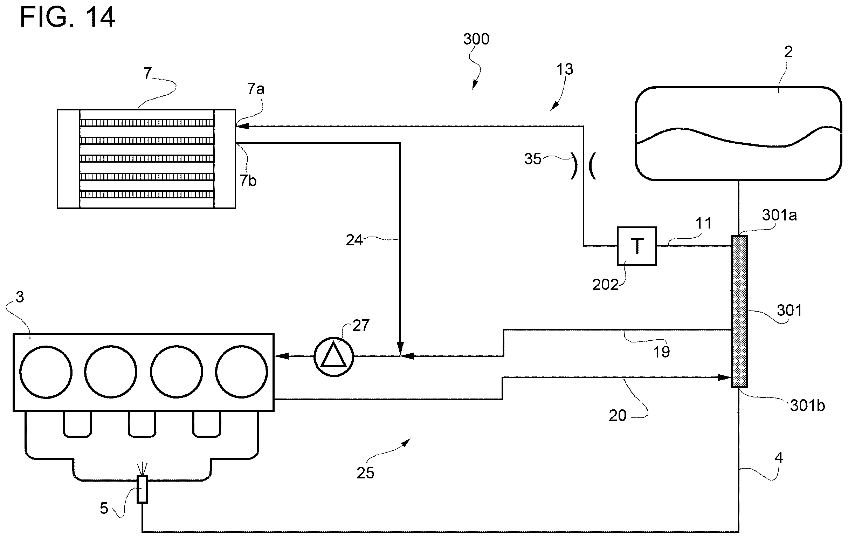

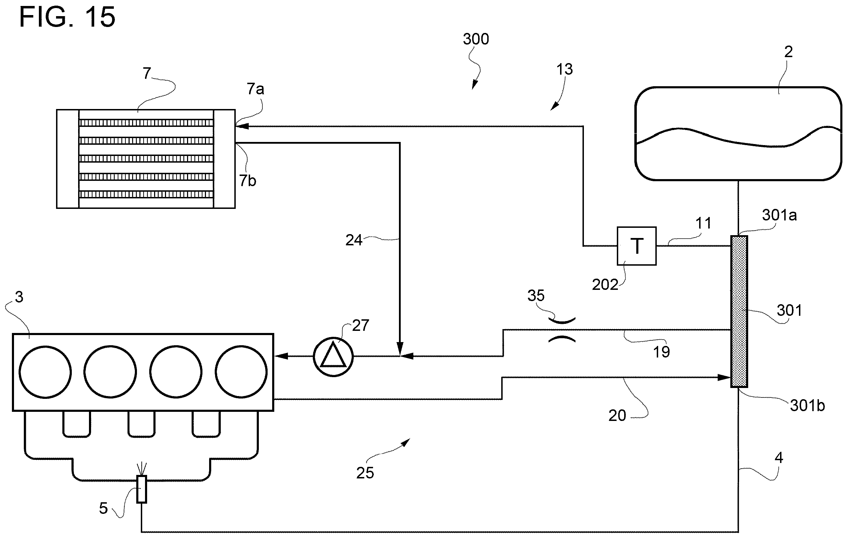

Figures 14 and 15 discloses further two alternative embodiments of the fourth embodiment of figure 11 where the position of throttle valve 35 and pump 27 are varied on conduits 11, 19 or 20. Since the operation of these two alternative embodiments is analogous to the operation of the fourth embodiment, it will be not repeated for sake of brevity being evident to one skilled in the art in the light of aforementioned fourth embodiment.

In all the aforementioned embodiments all the operable elements, i.e. valves or sensors, may be controlled by an electronic unit as already described for the first embodiment of the present invention.

In view of the foregoing, the advantages of a conditioning system according to the invention are apparent.

The use of the thermal absorption due to the expansion of the compressed liquid gas into gaseous phase allows to cool a refrigerant fluid without the use of the traditional elements of a refrigerant cycle such as the compressor or the evaporator.

In view of the above, the energy which is usually consumed by the compressor is not used in the conditioning system of the present invention, since the cooling is realized by profiting of the thermal expansion of an already compressed gas, i.e. the compressed liquid gas.

Moreover, since the aforementioned traditional elements are not present, the encumbrance and the costs of a conditioning system according to the present invention is lower with respect to a traditional conditioning system.

Further, modifying the positioning and typologies of valves in sub-circuits 13 and 25 , it is possible to manage the engine cooling fluid and use the latter both for cooling and for heating through main heat exchanger 7.

It is clear that modifications can be made to the described AC system, which do not extend beyond the scope of protection defined by the claims.

First, is clear that the conditioning system of the present invention may be used for different conditioning necessities of a gas vehicle, i.e. conditioning of electric equipment, not only for conditioning of the inner volume of the vehicle.

Moreover, the valves 30, 35 may be realized in a different way, or the pumps 15, 27, 35 may be substituted by equivalent devices. Obviously, other topography of circuits may be used.

## Claims

1. A conditioning system (1) for a gas vehicle comprising a source (2) of a gas in a compressed state, said gas being used for the operation of an engine (3) of said gas vehicle, said system (1) comprising a main heat exchanger (7) configured to use a first conditioning fluid for conditioning an inner volume/object of said gas vehicle and a first heat exchanger (10) positioned on a conduit (4) connecting said source (2) of said gas in said compressed state to said engine (3), said first heat exchanger (10) being fluidly connected to said main heat exchanger (7) and being configured to cool said first conditioning fluid thanks to the transition of said gas from said compressed state to an expanded state between an inlet (10a) and an outlet (10b) of said first heat exchanger (10);
said conditioning system further comprising a second heat exchanger (18) positioned on said conduit (4) downstream with respect to said first heat exchanger (10) and being fluidly connected to said main heat exchanger (7) and to said engine (3) in order to allow the passage of a second conditioning fluid inside said main heat exchanger (7) and said second heat exchanger (18), said second heat exchanger (18) being configured to overheat said gas in said expanded state in conduit (4) thanks to the passage of said second conditioning fluid flowing from said engine (3) between an inlet (18a) and an outlet (18b) of said second heat exchanger (18);
said first conditioning fluid and said second conditioning fluid being the same fluid;
**characterized in that** said conditioning system further comprises an electronic controlled volume flow valve (201), which is directly fluidly connected to said first heat exchanger (10), said second heat exchanger (18) and said engine (3);
said valve (201) being configured to receive said second conditioning fluid from said second heat exchanger (18), to allow the passage of said second conditioning fluid to said first heat exchanger (10) and to allow the passage of said second conditioning fluid to said engine (3);
said valve (201) being settable in a first configuration, in which it allows the passage of the majority of the engine cooling fluid in circuit (25) and said second conditioning fluid from said second heat exchanger (18) in circuit (25) to said engine (3) to cool it and only a few portion in conduit (12) to said first heat exchanger (10) to cool said inner volume/object of said gas vehicle;
said valve (201) being further settable in a second configuration, in which it allows the passage of only a few portion of said second conditioning fluid in the remaining portion of conduit (19) and therefore in circuit (25) from said second heat exchanger (18) to said engine (3) to cool it and the majority of the engine cooling fluid in circuit (13) via circuit (12)to said first heat exchanger (10) to heat said inner volume/object of said gas vehicle.

2. Conditioning system according to claim 1, wherein the circulation of said first and second conditioning fluids in the respective circuits is operated by a dedicated pump (15; 27).

3. Conditioning system according to claim 1 or 2, wherein said operable elements (30; 15; 27; 35) are controlled by a control unit.

4. Conditioning system according to any of claims 1 to 3, further comprising a sensor (202) configured to measure a physical entity of at least one of said conditioning fluids.

5. Conditioning system according to claim 4, wherein said sensor (202) is a temperature sensor.

6. Vehicle comprising a conditioning system (1) according any of the preceding claims.

7. Vehicle according to claim 6, wherein said control unit of said conditioning system (1) is an ECU of said vehicle.

8. Vehicle according to claims 6 or 7, wherein said first and second conditioning fluids are the cooling fluid of an engine of said vehicle.

## Patentansprüche

1. Klimatisierungssystem (1) für ein Gasfahrzeug mit einer Quelle (2) eines komprimierten Gases, wobei das Gas zum Betreiben eines Motors (3) des Gasfahrzeugs verwendet wird, wobei das Klimatisierungssystem (1) einen Hauptwärmetauscher (7), der dazu eingerichtet ist, ein erstes Klimatisierungfluid zum Klimatisieren eines inneren Volumens/Objekts des Gasfahrzeugs zu nutzen, und einen ersten Wärmetauscher (10), der auf einer Leitung (4), die die Quelle (2) des komprimierten Gases mit dem Motor (3) verbindet, angeordnet ist, umfasst, wobei der erste Wärmetauscher (10) mit dem Hauptwärmetauscher (7) fluidisch verbunden ist und dazu eingerichtet ist, das erste Klimatisierungfluid durch den Übergang des Gases von dem komprimierten Zustand in einen expandierten Zustand zwischen einem Einlass (10a) und einem Auslass (10b) des ersten Wärmetauschers (10) zu kühlen;
wobei das Klimatisierungssystem (1) ferner einen zweiten Wärmetauscher (18) umfasst, der in Bezug auf den ersten Wärmetauscher (10) stromabwärts an der Leitung (4) angeordnet ist und mit dem Hauptwärmetauscher (7) und dem Motor (3) fluidisch verbunden ist, um das Durchfließen eines zweiten Klimatisierungfluids innerhalb des Hauptwärmetauschers (7) und des zweiten Wärmetauschers (18) zu ermöglichen, wobei der zweite Wärmetauscher (18) dazu eingerichtet ist, das Gas in dem expandierten Zustand in der Leitung (4) durch das Durchfließen des aus dem Motor (3) fließenden zweiten Klimatisierungfluids zwischen einem Einlass (18a) und einem Auslass (18b) des zweiten Wärmetauschers (18) zu überhitzen;
wobei das erste Klimatisierungfluid und das zweite Klimatisierungfluid das gleiche Fluid sind;
**dadurch gekennzeichnet, dass** das Klimatisierungssystem (1) ferner ein elektronisch geregeltes Volumenstromventil (201) aufweist, dass direkt fluidisch mit dem ersten Wärmetauscher (10), dem zweiten Wärmetauscher (18) und dem Motor (3) verbunden ist;
wobei das Ventil (201) dazu eingerichtet ist, das zweite Klimatisierungfluid aus dem zweiten Wärmetauscher (18) aufzunehmen, das Durchfließen des zweiten Klimatisierungfluid zu dem ersten Wärmetauscher (10) zu ermöglichen und das Durchfließen des zweiten Klimatisierungfluid zu dem Motor (3) zu ermöglichen;
wobei das Ventil (201) in eine erste Konfiguration einstellbar ist, in der es das Durchfließen des Großteils der Motorkühlflüssigkeit im Kreislauf (25) und des zweiten Klimatisierungfluids von dem zweiten Wärmetauscher (18) im Kreislauf (25) zu dem Motor (3), zum Kühlen des Motors (3), und nur eines kleinen Anteils in der Leitung (12) zum ersten Wärmetauscher (10), zum Kühlen des inneren Volumens/Objekts des Gasfahrzeugs, ermöglicht;
wobei das Ventil (201) ferner in eine zweite Konfiguration einstellbar ist, in der es das Durchfließen eines nur kleinen Anteils des zweiten Klimatisierungfluids in dem verbleibenden Teil der Leitung (19) und somit im Kreislauf (25) von dem zweiten Wärmetauscher (18) zu dem Motor (3), zum Kühlen des Motors, und des Großteils der Motorkühlflüssigkeit im Kreislauf (13) über den Kreislauf (12) mit dem ersten Wärmetauscher (10), zum Erwärmen des Innenvolumens/Objekts des Gasfahrzeugs, ermöglicht.

2. Klimatisierungssystem nach Anspruch 1, wobei die Zirkulation des ersten und zweiten Klimatisierungfluids in den jeweiligen Kreisläufen von einer speziellen Pumpe (15; 27) betrieben wird.

3. Klimatisierungssystem nach Anspruch 1 oder 2, wobei die bedienbaren Elemente (30; 15; 27; 35) von einer Steuereinheit gesteuert werden.

4. Klimatisierungssystem nach einem der Ansprüche 1 bis 3, ferner umfassend einen Sensor (202) zur Messung einer physikalischen Einheit von mindestens einem der Klimatisierungfluide.

5. Klimatisierungssystem nach Anspruch 4, wobei der Sensor (202) ein Temperatursensor ist.

6. Fahrzeug mit einem Klimatisierungssystem (1) nach einem der vorhergehenden Ansprüche.

7. Fahrzeug nach Anspruch 6, wobei die Steuereinheit des Klimatisierungssystems (1) ein elektronisches Steuergerät (ECU) des Fahrzeugs ist.

8. Fahrzeug nach den Ansprüchen 6 oder 7, wobei das erste und das zweite Klimatisierungfluid die Kühlflüssigkeit eines Motors des Fahrzeugs ist.

## Revendications

1. Système de conditionnement (1) pour un véhicule à gaz comprenant une source (2) d'un gaz dans un état comprimé, ledit gaz étant utilisé pour le fonctionnement d'un moteur (3) dudit véhicule à gaz, ledit système (1) comprenant un échangeur de chaleur principal (7) configuré pour utiliser un premier fluide de conditionnement pour conditionner un volume/objet interne dudit véhicule à gaz et un premier échangeur de chaleur (10) positionné sur un conduit (4) raccordant ladite source (2) dudit gaz dans ledit état comprimé audit moteur (3), ledit premier échangeur de chaleur (10) étant raccordé, de manière fluidique, audit échangeur de chaleur principal (7) et étant configuré pour refroidir ledit premier fluide de conditionnement grâce à la transition dudit gaz dudit état comprimé à un état expansé entre une entrée (10a) et une sortie (10b) dudit premier échangeur de chaleur (10) ;
ledit système de conditionnement comprenant en outre un second échangeur de chaleur (18) positionné sur ledit conduit (4) en aval par rapport audit premier échangeur de chaleur (10) et étant raccordé, de manière fluidique, audit échangeur de chaleur principal (7) et audit moteur (3) afin de permettre le passage d'un second fluide de conditionnement à l'intérieur dudit échangeur de chaleur principal (7) et dudit second échangeur de chaleur (18), ledit second échangeur de chaleur (18) étant configuré pour surchauffer ledit gaz dans ledit état expansé dans le conduit (4) grâce au passage dudit second fluide de conditionnement qui s'écoule dudit moteur (3) entre une entrée (18a) et une sortie (18b) dudit second échangeur de chaleur (18) ;
ledit premier fluide de conditionnement et ledit second fluide de conditionnement étant le même fluide ;
**caractérisé en ce que** ledit système de conditionnement comprend en outre une soupape de débit volumique commandée électronique (201), qui est raccordée, de manière fluidique, audit premier échangeur de chaleur (10), audit second échangeur de chaleur (18) et audit moteur (3) ;
ladite soupape (201) étant configurée pour recevoir ledit second fluide de conditionnement dudit second échangeur de chaleur (18) pour permettre le passage dudit second fluide de conditionnement jusqu'audit premier échangeur de chaleur (10) et pour permettre le passage dudit second fluide de conditionnement jusqu'audit moteur (3) ;
ladite soupape (201) pouvant être paramétrable dans une première configuration, dans laquelle elle permet le passage de la majorité du fluide de refroidissement de moteur dans le circuit (25) et dudit second fluide de conditionnement dudit second échangeur de chaleur (18) dans le circuit (25) jusqu'audit moteur (3) pour le refroidir et uniquement d'une petite partie dans le conduit (12) jusqu'audit premier échangeur de chaleur (10) pour refroidir ledit volume/objet interne dudit véhicule à gaz ;
ladite soupape (201) étant en outre paramétrable dans une seconde configuration, dans laquelle elle permet le passage uniquement d'une petite partie dudit second fluide de conditionnement dans la partie résiduelle du conduit (19) et par conséquent dans le circuit (25) dudit second échangeur de chaleur (18) dans ledit moteur (3) pour le refroidir et de la majorité du fluide de refroidissement de moteur dans le circuit (13) via le circuit (12) jusqu'audit premier échangeur de chaleur (10) pour chauffer ledit volume/objet interne dudit véhicule à gaz.

2. Système de conditionnement selon la revendication 1, dans lequel la circulation desdits premier et second fluides de conditionnement dans les circuits respectifs est actionnée par une pompe dédiée (15 ; 27).

3. Système de conditionnement selon la revendication 1 ou 2, dans lequel lesdits éléments opérationnels (30 ; 15 ; 27 ; 35) sont commandés par une unité de commande.

4. Système de conditionnement selon l'une quelconque des revendications 1 à 3, comprenant en outre un capteur (202) configuré pour mesurer une entité physique d'au moins l'un desdits fluides de conditionnement.

5. Système de conditionnement selon la revendication 4, dans lequel ledit capteur (202) est un capteur de température.

6. Véhicule comprenant un système de conditionnement (1) selon l'une quelconque des revendications précédentes.

7. Véhicule selon la revendication 6, dans lequel ladite unité de commande dudit système de conditionnement (1) est une ECU dudit véhicule.

8. Véhicule selon les revendications 6 ou 7, dans lequel lesdits premier et second fluides de conditionnement sont le fluide de refroidissement d'un moteur dudit véhicule.
